# EUROPÄISCHE PATENTANMELDUNG

(11) **EP 2 361 691 A1**
(43) Veröffentlichungstag der Anmeldung: **31.08.2011**
(21) Anmeldenummer: 10154177.9
(22) Anmeldetag: 19.02.2010
(51) Int. Cl.: B05B 12/14, F16K 11/065, B05B 7/14

(54) **Fluidweiche**

(71) Anmelder: Ramseier Koatings Technologies AG, 4542 Luterbach (CH)
(72) Erfinder: Moser, Jürg, 3421 Lyssach (CH)
(74) Vertreter: Dunkelberg, Oliver Thomas Michael

(57) **Zusammenfassung**

Fluidweiche (1) zum schnellen Wechseln von zwei unterschiedlichen Fluiden, aufweisend eine Zuführplatte (2) zur Aufnahme von Zuführleitungen und eine Austragsplatte (3) zur Aufnahme von Austragsleitungen; zwei Fluidzuführleitungen (4a, 4b) auf der Zuführplatte (2) mit je einem Auslaß (5) pro Fluidzuführleitung (4a, 4b); eine zwischen den zwei Fluidzuführleitungen (4a, 4b) angeordnete Spülzuführung (6) auf der Zuführplatte (2) mit Auslass (7); zwei Fluidrückführleitungen (8a, 8b) auf der Austragsplatte (3) mit je einem Auslass (9) pro Fluidrückführleitung (8a, 8b); eine zwischen den zwei Fluidrückführleitungen (8a) und (8b) angeordnete Austragsleitung (10) auf der Austragsplatte (3) mit Einlass (11); wobei der Abstand zwischen den Fluidzuführleitungen (8a) und (8b) und der Spülzuführung (6) das Doppelte oder die Hälfte des Abstandes zwischen der Austragsleitung (10) und den Fluidrückführleitungen (8a, 8b) beträgt; die Auslässe (5), (7) und (11) auf der entsprechende Platte (2) bzw. (3) in einer Ebene liegen und zueinander linear angeordnet sind; die Zuführplatte (2) und/oder die Austragsplatte (3) in einer gemeinsamen Ebene in der Weise zueinander beweglich sind, dass jede der drei auf der Zuführplatte (2) befindlichen Auslässe (5) der entsprechenden Leitungen (4a, 4b) durch Bewegung der Zuführplatte (2) und/oder der Austragsplatte (3) mit dem Einlass (11) auf der Austragplatte verbunden werden können.

## Beschreibung

Die vorliegende Erfindung betrifft eine Fluidweiche zum schnellen Wechseln unterschiedlicher Fluide und deren Verwendung, insbesondere auf dem Gebiet der Lackiertechnologie.

Solche Fluidweichen sind im Allgemeinen als Farbwechsler bekannt und finden Anwendung bei Farbspritzanlagen, in welchen unterschiedliche Farben in unregelmässiger Reihenfolge nacheinander verarbeitet werden, insbesondere Farbspritzanlagen für Kraftfahrzeuge, wobei sie im Allgemeinen zwischen den einzelnen Farbvorratsbehältnissen und der Farbspritzeinrichtung angeordnet sind.

So gibt es beipielsweise stationäre Farbwechsler, die üblicherweise räumlich entfernt vom Beschichtungsgerät angeordnet sind. Solche Wechsler besitzen der Anzahl der zur Verarbeitung vorgesehenen Farben entsprechende Zuführungen, die einzeln absperrbar sind und von denen jeweils eine Zuführung zwecks Einspeisung der gewünschten Farbe geöffnet wird. Bei einem Farbwechsel muss zunächst die betreffende Zuführung geschlossen werden. Anschliessend erfolgt eine Spülung des Farbwechslers und der Zuführleitung zum Sprühbeschichtungsgerät, um Farbrückstände der seitherigen Farbe zu beseitigen, so dass die Vermischung mit der neuen Farbe ausgeschlossen ist. Hierbei wird das am Farbwechsler eingeleitete Reinigungsfluid bei Erreichen des Farbbeschichtungsgerätes herausgeleitet. Aus der US 3 201 048 ist ein Farbwechselblock für eine Farbauftragsvorrichtung bekannt, in dessen kreiszylindrisches Gehäuse an einer Stirnseite Speiseleitungen für unterschiedliche Farbfluide und Reinigungsfluide sowie Steuerleitungen für Druckfluide der Steuerventile für die unterbrechbare Farb-/Reinigungsfluidzufuhr führen, sowie an seiner gegenüberliegenden Stirnseite einen Zuführleitungsanschluss aufweist und in seinem Inneren einen Fluidkanal bildet, der mittels der Steuerventile die absperrbaren Einspeiseanschlüsse mit dem Zufuhranschluss verbindet.
Solche stationären Systeme haben einerseits den Nachteil, dass in den Zuführleitungen erhebliches Totvolumen vorhanden ist, welches aufwendig gereinigt werden muß. Zum Anderen nutzen viele System nur eine gemeinsame Zuführleitung so dass ein Wechsel von kritischen Tönen (Weiß nach Schwarz) praktisch nicht möglich ist. Des Weiteren entstehen durch das Spülen erhebliche Farbwechselverluste.

Um die Farbwechselverluste in den üblichen Farbwechslern zu vermeiden, wurden nach dem Andock-Prinzip arbeitende Farbwechselsysteme entwickelt, bei denen die für die verschiedenen Farbtöne vorgesehenen Farbleitungen mit mechanisch bewegbaren Ventilelementen an eine zu dem Zerstäuber führende Leitung ankuppelbar sind.
Die US 3,674,207 beschreibt ein System zum automatischen Beschichten, bei dem ein in linearer Richtung verfahrbarer Abnehmer verschiedene Positionen anfahren kann, um dann mittels Ventil und/oder Kupplung eine geschlossene Verbindung mit einer feststehenden Beschichtungsstoff-Zuleitung herzustellen. Diese Schrift beschreibt ein einreihiges lineares System, bei dem es nicht möglich ist, während eines Beschichtungsvorganges zugleich bezüglich des vorhergehenden Beschichtungsvorganges die Reinigung des Systems durchzuführen. Weiterhin bleibt während des Beschichtens die Verbindung des Beschichtungsroboters mit der feststehenden Beschichtungsstoff-Zuleitung ständig geschlossen.
Die DE 33 40 614 C1 zeigt einen Beschichtungsroboter, dem die einzelnen Beschichtungsstoffe über offene Schlauchkupplungen zur Verfügung gestellt werden. Es wird daher auf ein gemeinsames Beschichtungsstoff- Rohr verzichtet. Der Beschichtungsroboter wird dabei mit einem Beschichtungsstoff versorgt, indem er sich zuerst zu einer Beschichtungsstoff-Kupplung des jeweiligen Beschichtungsstoffes bewegt und dort ankoppelt. Anschließend bewegt sich der Beschichtungsroboter zu der Stelle des Beschichtungsvorganges, wobei er über die Beschichtungsstoff-Kupplung einen flexiblen Beschichtungsstoff-Schlauch hinter sich herzieht, der den jeweiligen zu beschichtenden Beschichtungsstoff enthält. Der Ankopplungsvorgang erfolgt dabei, indem der Beschichtungsstoff-Abnehmer zu der Position der Beschichtungsstoff-Kupplung bewegt wird.
Weitere Andocksysteme sind aus der EP 1 245 295 A2 , DE 100 64 065 A1 oder DE 601 11 607 T2 bekannt.
Mit diesen Farbschnittstellen lässt sich zwar gegenüber den üblichen Farbwechslern eine Farbersparnis (von typisch etwa 10 ml bei jedem Farbwechsel) erreichen, doch haben sie verschiedene praktische Nachteile wie aufwändige Bewegungssteuerung zum Anfahren der Ankuppelpositionen, hohen Wartungsbedarf, Spülen der Schnittstelle, Antrocknen von Farbe an der Schnittstelle, Undichtigkeiten usw.

Um schnellere Farbwechsel zu ermöglichen, wurden Farbwechsler entwickelt, die nicht mehr stationär, sondern direkt an der Applikationseinheit verbunden werden können.
Solche bekannten Farbwechselsysteme, die insbesondere in Lackierstrassen der Fahrzeugindustrie im Einsatz sind, bestehen üblicherweise aus einem langgestreckten quaderförmigen Gehäusekörper an dessen gegenüberliegenden schmalen Längsseiten jeweils Anschlüsse für die zur Verarbeitung vorgesehenen Farben sowie für Druckluft und Reinigungsfluid angeordnet sind (lineare Wechsler). Je nach gewünschter Anzahl der zu verarbeitenden Farben ergibt sich hierbei eine unterschiedliche Länge des Farbwechselgehäuses. Bei der heute üblichen grossen Farbvielfalt führt dies häufig dazu, dass wegen der hierdurch bedingten Gehäuselänge eine Aufteilung auf zwei Farbwechselsysteme oder mehr erforderlich ist. Dies wiederum führt zu Platzproblemen bei der Installation der Farbwechsler, welche möglichst nahe den Farbauftrageinrichtungen angeordnet sein sollen.
Aus der DE 42 14 779 A1 ist ein Farbwechsler für ein Handbeschichtungssytem bekannt, der aus zwei kreisförmige Scheiben gleichen Durchmessers gebildet ist, die mit gemeinsamer Grenzfläche aneinander liegend zentrisch gehalten sind, wobei die erste Scheibe mit auf einem konzentrischen Kreis angeordnetem, die Scheibe durchgreifenden Durchgangsbohrungen versehen ist und die zweite Scheibe mit einer auf einem konzentrischen Kreis mit gleichem Radius angeordneten Durchgangsbohrung für die Austrittsöffnung versehen ist, und dass durch Relativdrehung beider Scheiben zueinander und hierdurch bewirkte Fluchtung einer Bohrung der ersten Scheibe mit der einzigen Bohrung der zweiten Scheibe die jeweilige Farbe bzw. das Reinigungsfluid anwählbar ist.

Die DE 43 29 101 A1 offenbart eine Wechselsystemeinheit für verschiedene Medien, insbesondere Farbwechsler für Farbspritzanlagen mit separaten Einspeisungen, die Sperrglieder aufweisen und mit einem gemeinsamen Ausgang verbindbar sind, bei denen die Einspeisungen als Module ausgebildet und welche kaskadenförmig angeordnet sind. Unterhalb dieser kaskadenförmig ausgebildeten Module befindet sich ein sogenannter Drehschalter, über den das entsprechende Medium austreten kann, welcher gleichzeitig als Sperrglied arbeitet. Diese Anordnung erschwert eine totraumarme und leicht spülbare Ausführung, da in jedem Kaskadenmodul ein Schieber als Sperrglied erforderlich ist.
Aus der DE 43 30 602 A1 ist eine Drehzerstäubervorrichtung zum elektrostatischen Beschichten mit einer Vielzahl an Farbdüsen und einer Druckluftdüse zum Spülen bekannt. Jede Farbendüse kommuniziert über entsprechende Farbenkanäle, die pfadweise voneinander getrennt sind, alleine mit einer entsprechenden Farbenquelle. In jeder Zuführleitung ist ein entsprechendes Ventil eingebaut. Wenn die Farbe gewechselt wird, wird die betriebene Farbendüse und die den daran angeschlossenen Farbenkanal füllende Farbe nicht ausgewaschen.
Aus der DE 43 39 301 A1 ist ein weiterer Farbwechsler für ein Handbeschichtungssytem bekannt, bei dem der Farbwechselblock kreiszylindrisch ausgebildet ist, der mit an einer Stirnseite angeordneten Anschlüssen für die Speise- und Steuerleitungen und mit einem an der gegenüberliegenden Stirnseite angeordneten Anschluss für die Zuführleitung versehen ist, wobei der Farbwechselblock im Inneren eine Spiralnut aufweist, welche die mittels der Steuerventile absperrbaren Einspeiseanschlüsse mit dem Anschluss für die Zuführleitung verbindet. Hierbei strömen sämtliche Lacke durch die gemeinsame Nut und diese ist im Volumen abhängig von der Anzahl der angeschlossenen Beschichtungsstoffe. Bei jedem Lackwechsel ist deshalb diese Nut vollständig zu spülen.
Auch die DE 198 27 213 A1 offenbart eine Mehrfarben- Beschichtungsvorrichtung, bei der für sämtliche angeschlossenen Farben eine gemeinsame Beschichtungsstoff-Zuführung vorgesehen ist, deren Volumen mit der Anzahl der gleichzeitig angeschlossenen Farben wächst. Sämtliche Auslässe der angeordneten Beschichtungsstoff-Leitungen sind an eine einzelne Pumpe angeschlossen.
Die DE 100 10 175 A1 beschreibt einen Farbwechsler für die automatisierte Beschichtungstechnik mit einer Vielzahl von Zuleitungen, wobei jede der Zuleitungen mit einer eigenen Kupplung versehen ist, die über einen separaten Aktor betätigt wird, so dass die gewählte Farbe über eine gemeinsame Austragsleitung einem Applikationsorgan zugeführt wird. Ein vergleichbares System ist darüber hinaus aus der EP 1 245 295 A2 bekannt.
Die DE 198 22 131 A1 beschreibt einen Farbwechsler zum wahlweisen Einspeisen von unterschiedlichen Farben mit je einem Grundkörper, in dem quer zu seiner Längsachse, der Durchströmungsrichtung des jeweiligen Mediums, ein kegelförmig ausgebildetes Verschlussstück angeordnet ist. Über einen mechanischen Aktor wird ein im Verschlussstück befindlicher Überstromkanal so gedreht, dass die Farbe des jeweiligen Grundkörpers im Kreislauf (und nicht zur Applikationsstelle) geführt wird, um ein Absetzen (Sedimentation) der Farbe zu verhindern. Durch die lineare Anreihung der verschiedenen Grundkörper entsteht ein hohes Totvolumen, welches durch eine separate Druckluftleitung gespült werden muß.
Die DE 20 2006 015 557 U1 beschreibt ebenfalls einen Farbwechsler mit Vor- und Rücklaufleitungen für die einzelnen Farbmodule. Die Steuerung erfolgt durch separate Ventile. Durch die Serienschaltung der einzelnen Farbmodule entsteht auch hier ein nicht unerhebliches Totvolumen vor der Applikationseinheit. Eine Steuerung über Überdruckventile ist aus der DE 297 19 535 U1 bekannt.

Die WO 2006/004601 A1 offenbart ein Farbwechselsystem mit einem zentralen Wechslerblock. Der Wechslerblock wird von Pulverzuführeinrichtungen gespeist und leitet das Fluid zu der Auftragseinrichtung. Im Falle eines Farbwechsels wird das in der Zuführleitung befindliche Fluid in die Vorratsbehälter zurückgeführt und das zwischen dem Wechslerblock und der Auftragsvorrichtung befindliche Pulver ausgeblasen. Dieses System ermöglicht keine schnellen Farbwechsel und erfordert einen längeren Spülvorgang. Zudem ergibt sich dadurch ein erheblicher Pulververlust.

Wie schon erwähnt wurde, sind Farbwechsler in Lackieranlagen allgemein üblich, weil sie bekanntlich während des Lackierbetriebs eine rasche Umstellung von einer Farbe zur anderen ermöglichen. Sie haben aber den prinzipiellen Nachteil unvermeidbarer Farbverluste beim Spülen des mehr oder weniger großen Zentralkanals bei jedem Farbwechsel. Nach Optimierung der Farbverluste in beispielsweise gemolchten Schläuchen, Dosiervorrichtungen usw. stellt der Farbwechsler oft das Element der Beschichtungsanlage mit dem größten Einzelverlust dar. Der Farbwechselverlust ist umso größer, je größer der Querschnitt des Zentralkanals gewählt wird, um größere Farbmengen in kürzerer Zeit durch den Farbwechsler leiten zu können, wie es aus verschiedenen Gründen erwünscht sein kann (Sonderfarbversorgungen, Behältertechnik, höherer Lackiermengen, kürzere Taktzeiten aufeinander folgender Werkstücke, höhere Viskositäten usw.). Außerdem wachsen die Farbwechselverluste mit der Anzahl der angeschlossenen Farben und der sich hieraus ergebenden Länge des Zentralkanals, so dass die Anzahl der Farbtöne oft unerwünscht begrenzt werden muss.

Eine technische Lösung zur Entleerung der überschüssigen Farbe aus dem Totvolumen wird mit Hilfe von so genannten Molchsystemen umgesetzt. Diese sind beispielsweise in der EP 1 172 152 A1, EP 1 270 083 A1 und EP 1 384 518 A2 beschrieben. Solche Molchsysteme sind aber aufwendig im Betrieb und darüber hinaus störanfällig.

Ein ganz anderes Prinzip der Farbwechsel ist in der EP 1 616 634 A1 beschrieben. Dort wird das nach jedem Farbwechsel durch den Spülvorgang ausgeschiedene Fluid in einem oder mehreren Behältern gesammelt und für eine spezielle Lackschicht aufbereitet. Diese Lösung ist nicht auf allgemeine Lackiervorgänge, beispielsweise mit nur einer Farbschicht, anwendbar.

Diese zuvor genannten Farbwechsler weisen für jede Farb- und Reinigungsleitung mindestens je ein Absperrorgan oder eine Kupplung auf, die entweder manuell oder über spezielle mechanische Aktoren gesteuert wird.

Aufgabe der vorliegenden Erfindung ist die Bereitstellung eines Wechselsystems für zwei unterschiedliche Medien, insbesondere für Farben aller Art, besonders bevorzugt für Pulverlacke, das gegenüber dem Stand der Technik einfacher herstellbar ist, ohne die zuvor genannten Nachteile aufzuweisen. Insbesondere soll das erfindungsgemäße System sicherstellen, dass es zu keinen Entmischungen in den Zuführleitungen kommt - insbesondere auf dem Gebiet der Pulverlackierungen haben Entmischungen einen erheblichen negativen Einfluß auf die Lackierqualität. Des Weiteren soll das erfindungsgemäße Wechselsystems eine Ausführungsform bereitstellen, in der kein zusätzliches, durch den Einbau des erfindungsgemäßen Wechselsystems bedingtes, Totvolumen entsteht.

Die Aufgabe wird erfindungsgemäß gelöst durch eine Fluidweiche zum schnellen Wechseln von zwei unterschiedlichen Fluiden, aufweisend
a) eine Zuführplatte (2) zur Aufnahme von Zuführleitungen und eine Austragsplatte (3) zur Aufnahme von Austragsleitungen;
b) zwei Fluidzuführleitungen (4a, 4b) auf der Zuführplatte (2) mit je einem Auslass (5) pro Fluidzuführleitung (4a, 4b);
c) eine zwischen den zwei Fluidzuführleitungen (4a, 4b) angeordnete Spülzuführung (6) auf der Zuführplatte (2) mit Auslass (7);
d) zwei Fluidrückführleitungen (8a, 8b) auf der Austragsplatte (3) mit je einem Einlass (9) pro Fluidrückführleitung (8a, 8b);
e) eine zwischen den zwei Fluidrückführleitungen (8a) und (8b) angeordnete Austragsleitung (10) auf der Austragsplatte (3) mit Einlass (11);
   wobei
f) der Abstand zwischen den Fluidzuführleitungen (8a) und (8b) und der Spülzuführung (6) das Doppelte oder die Hälfte des Abstandes zwischen der Austragsleitung (10) und den Fluidrückführleitungen (8a, 8b) beträgt;
g) die Auslässe (5), (7) und (11) auf der entsprechende Platte (2) bzw. (3) in einer Ebene liegen und zueinander linear angeordnet sind;
h) die Zuführplatte (2) und/oder die Austragsplatte (3) in einer gemeinsamen Ebene in der Weise zueinander beweglich sind, dass jede der drei auf der Zuführplatte (2) befindlichen Auslässe (5) der entsprechenden Leitungen (4a, 4b) durch Bewegung der Zuführplatte (2) und/oder der Austragsplatte (3) mit dem Einlass (11) auf der Austragplatte verbunden werden können.

Hier und im Folgenden wird unter dem Begriff "Fluid" jede Substanz verstanden, die fest, flüssig oder gasförmig vorliegt, die in Reinform oder in Mischungen mit anderen Lösungsmitteln (Lösung) oder als Dispersion oder in fluidisierter Form vorliegt. Das "Fluid" ist ein mit Hilfe der erfindungsgemäßen Fluidweiche zu transportierendes Medium.

Eine besondere Form eines Fluids ist der sogenannte Dichtstrom (auch als DDF - Dichtstromförderung - bezeichnet). Dabei wird mit Hilfe eine Transportgases (Luft) ein pulverförmiges Medium mit einer relativ geringen Transportgeschwindigkeit von 4 m/s transportiert. Im Gegensatz dazu wird beispielsweise mit einem Verfahren auf Basis einer Venturidüse das pulverförmige Medium mit einer vierfach höheren Transportgeschwindigkeit von 16 m/s gefördert. Ein weiterer Unterschied zwischen dem Pulvertransport auf Basis des Dichtstroms und dem des Venturiprinzips ist, dass die Dichtigkeit (also die Menge an zu transportierendem Pulver in dem Transportstrom) beim Dichtstrom 10 mal höher ist als bei Systemen auf Basis von Venturi. Im Falle von kritischen Oberflächen wird deshalb erfindungsgemäß ein Fluid auf Basis des Dichtstrom gewählt.
Hierzu sind besondere Transportvorrichtungen (Pumpen) notwendig, wie sie beispielsweise in der EP 1 427 536 B1 beschrieben sind.

Hier und im Folgenden wird unter dem Begriff "Zuführplatte" bzw. "Austragsplatte" wird jedes Element bezeichnet, das mindestens eine Fläche aufweist, auf der sich alle drei Auslässe der unterschiedlichen Zuführleitungen befinden. Die Zuführleitungen selber und/oder deren Verbindungen befinden sich nicht in dieser Fläche, sondern bewegen sich von dieser Fläche weg.

Der entscheidende Unterschied zwischen der erfindungsgemäßen Fluidweiche und den Erzeugnissen des Standes der Technik ist, dass die erfindungsgemäße Fluidweiche weder ein Molchsystem zur Reinigung der Leitungen bzw. Rückführung der zu transportierenden Medien noch Ventile oder andere Aktoren zur Unterbrechung der zu fördernden Fluide und des Spülmediums, welches durch die Spülzuleitung geleitet wird, benötigt.

In einer bevorzugten Ausfühungsform weist die erfindungsgemäße Fluidweiche keine Absperrorgane auf. Insbesondere zwischen der erfindungsgemäßen Fluidweiche und der Austragsvorrichtung (z.B. ESTA-Pistole) einerseits und der erfindungsgemäßen Fluidweiche und der Pulverförderungsvorrichtung (Pumpe) andererseits sind keine Absperrorgane zu finden. Als Absperrorgane werden ganz allgemein jede Vorrichtung verstanden, die mit Hilfe mechanischer Mittel den Transportstrom unterbricht. Beispiele für solche Absperrorgane sind jede Art von Ventilen, insbesondere Quetschventile.

Mit der erfindungsgemäßen Fluidweiche ist es erstmals möglich, durch eine simple Bewegung der Zuführplatte und/oder der Austragsplatte in einer gemeinsamen Ebene drei verschiedene Betriebspositionen zu erreichen.

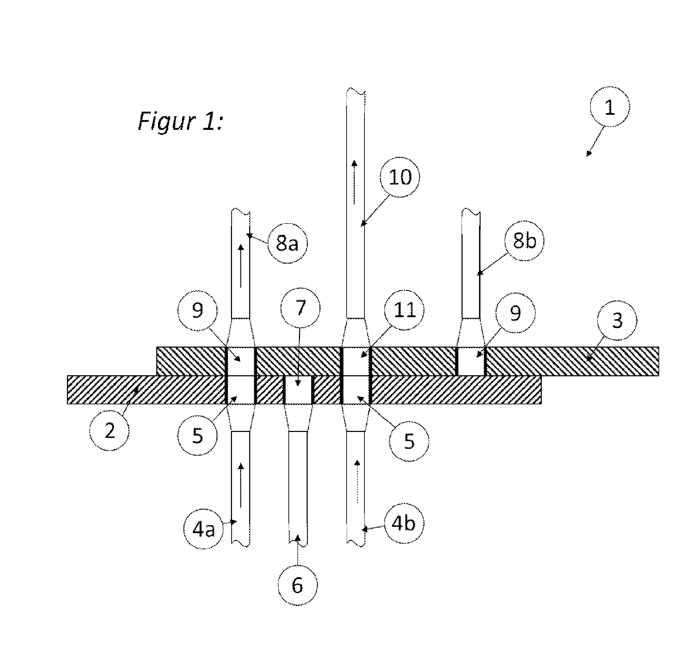

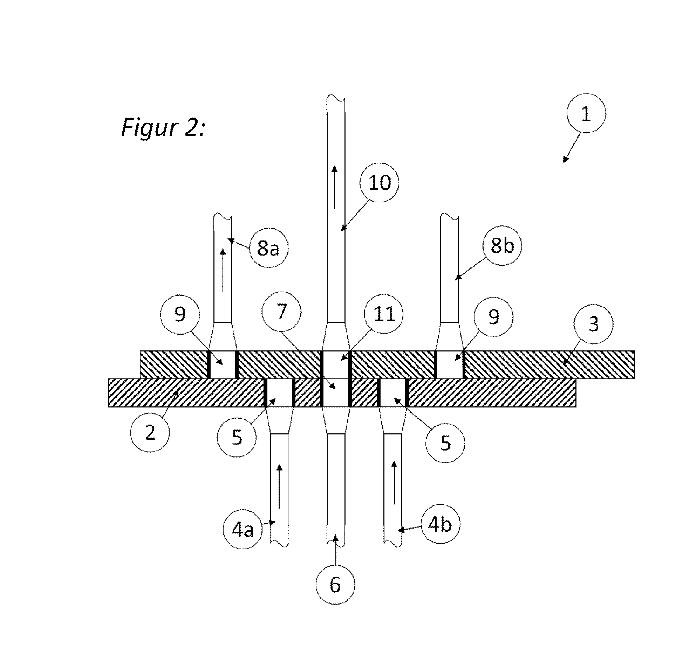

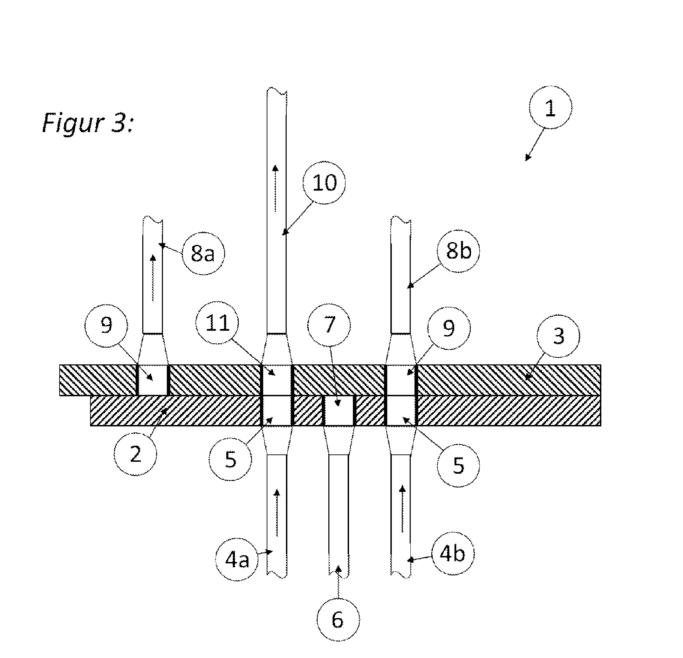

Diese sind:
1. Austrag des Fluids B (Fig. 1): In diesem Zustand ist die Fluidzuführleitung B (4b) auf der Zuführplatte (2) mit der Austragsleitung (10) auf der Austragsplatte (3) über den Auslass (5) und den Einlass (11) verbunden. Die Austragsleitung (10) ist direkt mit der (nicht dargestellten Applikationsvorrichtung) verbunden. Die Spülzuführleitung (6) auf der Zuführplatte (2) dichtet gegen die Fläche der Austragsplatte (oder gegen entsprechende Dichtelemente). Die Fluidzuführleitung A (4a) auf der Zuführplatte (2) ist über den Auslass (5) mit dem Einlass (9) auf der Austragsplatte (3) und somit mit der Fluidrückführleitung (8a) verbunden (ggf. über entsprechende spezielle Dichtelemente).
2. Austrag des Mediums aus der Spülzuführleitung (Fig. 2): In diesem Zustand ist die Spülzuführleitung (6) auf der Zuführplatte (2) mit der Austragsleitung (10) auf der Austragsplatte (3) über den Auslass (7) und den Einlass (11) verbunden. Die Fluidzuführleitung A (4a) auf der Zuführplatte (2) dichtet gegen die Fläche der Austragsplatte (3) (oder gegen entsprechende Dichtelemente). Die Fluidrückführleitung A (8a) auf der Austragsplatte (3) dichtet gegen die Fläche der Zuführplatte (2) (oder gegen entsprechende Dichtelemente). Die Fluidzuführleitung B (4b) auf der Zuführplatte (2) dichtet gegen die Fläche der Austragsplatte (3) (oder gegen entsprechende Dichtelemente). Die Fluidrückführleitung B (8b) auf der Austragsplatte (3) dichtet gegen die Fläche der Zuführplatte (2) (oder gegen entsprechende Dichtelemente).
3. Austrag des Fluids B (Fig. 3): In diesem Zustand ist die Fluidzuführleitung A (4a) auf der Zuführplatte (2) mit der Austragsleitung (10) auf der Austragsplatte (3) über den Auslass (5) und den Einlass (11) verbunden. Die Spülzuführleitung (6) auf der Zuführplatte (2) dichtet über deren Auslass (7) gegen die Fläche der Austragsplatte (3) (oder gegen entsprechende Dichtelemente). Die Fluidzuführleitung B (4b) auf der Zuführplatte (2) ist über den Auslass (5) mit dem Einlass (9) auf der Austragsplatte (3) und somit mit der Fluidrückführleitung (8b) verbunden (ggf. über entsprechende Dichtelemente).

Ein Wechsel der zuvor beschriebenen Zustände erfolgt bevorzugt in folgender Weise: Ausgangsposition ist die unter 1. beschriebene Position. In dieser Position wird das zu fördernde Fluid aus der Fluidzuführleitung B (4b) über die Austragsleitung (10) auf der Austragsplatte (3) über den Einlass (11) an die Applikationvorrichtung oder entsprechende Verbraucher transportiert. Das in der Fluidzuführleitung A (4a) zu fördernde Fluid wird über den Auslass (5) der Zuführplatte (2) in die Fluidrückführungleitung A (8a) geführt, und zwar durch den entsprechenden Einlass (9) der Austragsplatte (3). Damit ist in Position 1. eine kontinuierliche Förderung des zu fördernden Fluids der Fluidzuführleitung B (4b) an den Verbraucher sowie eine Kreislaufförderung des zu fördernden Fluids der Fluidzuführleitung A (4a) gewährleistet. Auf diese Weise gewährleistet die erfindungsgemäße Fluidweiche eine kontinuierliche Förderung aller zu fördernden Fluide.
Nun erfolgt ein Wechsel von der unter 1. beschriebenen Position zu der unter 2. Beschriebenen Position: Vor dem mechanischen Bewegen (Verschieben) der Zuführplatte (2) und der Austragsplatte (3) wird die Zufuhr der Fluidzuführleitungen (4a, 4b) gestoppt. Die Zufuhr der Spülzuführung kann ebenfalls gestoppt werden. Das Stoppen der verschiedenen Zuführleitung wird beipielsweise durch ein Stoppen der entsprechenden Zuführvorrichtungen (Pumpen) bewerkstelligt. Im Bereich der erfindungsgemäßen Fluidweiche sind deshalb auch keine zusätzlichen Absperrvorrichtungen notwendig.
Nach dem Unterbrechen der verschiedenen Zuführleitungen wird dann die Zuführplatte relativ zu der Austragsplatte so bewegt, dass die unter 2. beschriebene Position erreicht wird. Vor dem Verschieben der Platten ist es zweckmäßig, aber nicht zwingend erforderlich, dass der Abstand zwischen der Zuführplatte und/oder der Austragsplatte vergrößert wird. In diesem Fall liegen die entsprechenden Zuführleitungen offen. Eine Erhöhung der Abstände um 1 bis 3 mm hat sich als besonders vorteihaft erwiesen.
Es ist aber auch möglich, dass die zueinander verschiebbaren Flächen der Zuführplatte und der Austragsplatte ohne Erhöhung des Abstandes bewegt werden. In diesem Fall ist es vorteilhaft, wenn die Flächen praktisch keinen Zwischenraum bilden und eine möglichst glatte (polierte) Oberfläche aufweisen, damit sich kein zu transportierendes Medium (Pulver) zwischen den verschiebbaren Flächen sammeln kann.
Unabhängig von der Frage der Erhöhung des Abstandes vor dem Verschieben der Flächen kann es vorteilhaft sein, wenn zusätzlich zwischen den verschiebbaren Flächen der Zuführplatte und der Austragsplatte Dichtelemente angeordnet sind. Solche Dichtelemente können flächig oder partiell auf einer oder beiden gegeneinander verschiebbaren Flächen angeordnet sein.
Nach dem Verschieben der Zuführplatte und der Austragsplatte in die unter 2. beschriebene Position wird dann die Spülzuführungen in Betrieb genommen. Im einfachsten Fall wird (wenn das zu transportierende Medium ein Feststoff ist) durch die Spühlzuführung Druckluft geleitet. Hierdurch wird zwischen der erfindungsgemäßen Fluidweiche und der Auftragungsvorrichtung befindliches Medium (z.B. Pulver) ausgetragen und die dazugehörigen Leitungen gereinigt. Ein solcher Vorgang nimmt sehr wenig Zeit in Anspruch. Je nach gewähltem Druck sind weniger als 10 Sekunden, insbesondere nur 2 Sekunden, für einen solchen Vorgang erforderlich, auch bei kritischem Farbtonwechsel (z.B. von Schwarz nach Weiß). Dann wird die Zufuhr des Spülmediums (Druckluft) gestoppt.
Anschließend wird ein Wechsel von der unter 2. beschriebenen Position zu der unter 3. beschriebenen Position durchgeführt, wie er zuvor beschrieben wurde.
Nach Erreichen der unter 3. beschriebenen Position wird dann die Zufuhr der Fluide in den Fluidzuführleitungen A (4a) und B (4b) in Betrieb genommen, so dass das in der Fluidzuführleitung A (4a) transportierte Medium der Austragsleitung zugeführt wird und das in der Fluidzuführleitung B (4b) zu bewegegende Fluid wird über den Auslass (5) der Zuführplatte (2) in die Fluidrückführungleitung A (8a) durch den entpsrechenden Einlass (9) der Austragsplatte (3) geführt.

In einer bevorzugten Ausführungsfom der vorliegenden Erfindung sind zwischen der die Auslässe aufweisenden Fläche der Zuführplatte (2) und der der Austragsplatte (3) Dichtelemente angeordnet, die insbesondere eine Steckverbindung der zu transportierenden Fluide ermöglichen. Eine solche Ausführungsform bietet eine zusätzliche Dichtungsmöglichkeit bei besonders kritisch zu fördernden Medien.

Gemäß einer weiteren, ebenfalls bevorzugten Ausführungsfom der vorliegenden Erfindung sind die notwendigen Schritte fü eine Bewegung der Zuführplatte (2) und/oder die Austragsplatte (3) wie folgt: Abstandsvergrößerung zwischen den Ebenen der Zuführplatte (2) und der Austragsplatte (3), Verschieben der Zuführplatte (2) und/oder der Austragsplatte (3) sowie Wiederherstellung der Ausgangsabstands zwischen den Ebenen der Zuführplatte (2) und der Austragsplatte (3).

Im Falle der besonders bevorzugten Förderung von Pulvern als Fluiden ist die Spülzuführleitung (6) eine Druckluftleitung die Fluidzuführ- (4a, 4b) und Fluidrückführungsleitungen (8a, 8b) sind Leitungen zum Fördern von Luft/Feststoff-Gemischen.

Wie zuvor in einigen optionalen Ausführungsfomen beschrieben, weist die Fluidweiche (1) keine Absperrorgane aufweist. Insbesondere sind zwischen der Fördervorrichtung (Pumpe) am Anfang der Fluidzuführleitungen (4a, 4b) und dem Ende der Fluidrückführleitungen (8a, 8b) sowie der Austragsleitung (10) keine Absperrvorrichtungen vorhanden. Bezüglich der Definition des Begriffes "Absperrvorrichtung" wird auf die vorherigen Abätze verwiesen.

Die erfindungsgemäße Fluidweiche kann überall dort verwendet werden, wo Fluide jeglicher Art transportiert werden sollen. Bevorzugterweise wird sie bei der Förderung von flüssigen oder festen Medien, insbesondere von fluidisierten Feststoffen, besonders bevorzugt auf dem Gebiet der Pulverlackierung, eingesetzt.

### Bezugszeichenliste:

- (1): Fluidweiche
- (2): Zuführplatte
- (3): Austragsplatte
- (4a): Fluidzuführleitung
- (4b): Fluidzuführleitung
- (5): Auslässe der Fluidzuführleitungen
- (6): Spülzuführung
- (7): Auslass der Spülzuführung
- (8a): Fluidrückführleitungen
- (8b): Fluidrückführleitungen
- (9): Einlässe der Fluidrückführleitungen
- (10): Austragsleitung
- (11): Einlass der Austragsleitung

## Patentansprüche

1. Fluidweiche (1) zum schnellen Wechseln von zwei unterschiedlichen Fluiden, aufweisend
a) eine Zuführplatte (2) zur Aufnahme von Zuführleitungen und eine Austragsplatte (3) zur Aufnahme von Austragsleitungen;
b) zwei Fluidzuführleitungen (4a, 4b) auf der Zuführplatte (2) mit je einem Auslass (5) pro Fluidzuführleitung (4a, 4b);
c) eine zwischen den zwei Fluidzuführleitungen (4a, 4b) angeordnete Spülzuführung (6) auf der Zuführplatte (2) mit Auslass (7);
d) zwei Fluidrückführleitungen (8a, 8b) auf der Austragsplatte (3) mit je einem Einlass (9) pro Fluidrückführleitung (8a, 8b);
e) eine zwischen den zwei Fluidrückführleitungen (8a) und (8b) angeordnete Austragsleitung (10) auf der Austragsplatte (3) mit Einlass (11);
wobei
f) der Abstand zwischen den Fluidzuführleitungen (8a) und (8b) und der Spülzuführung (6) das Doppelte oder die Hälfte des Abstandes zwischen der Austragsleitung (10) und den Fluidrückführleitungen (8a, 8b) beträgt;
g) die Auslässe (5), (7) und (11) auf der entsprechende Platte (2) bzw. (3) in einer Ebene liegen und zueinander linear angeordnet sind;
h) die Zuführplatte (2) und/oder die Austragsplatte (3) in einer gemeinsamen Ebene in der Weise zueinander beweglich sind, dass jede der drei auf der Zuführplatte (2) befindlichen Auslässe (5) der entsprechenden Leitungen (4a, 4b) durch Bewegung der Zuführplatte (2) und/oder der Austragsplatte (3) mit dem Einlass (11) der Austragsleitung (10) auf der Austragplatte verbunden werden können.

2. Fluidweiche (1) nach Anspruch 1, **dadurch gekennzeichnet, dass** die Bewegung der Zuführplatte (2) und/oder die Austragsplatte (3) durch ein Verschieben mindestens einer der Platten (2, 3) bewirkt wird.

3. Fluidweiche (1) nach Anspruch 1, **dadurch gekennzeichnet, dass** zwischen der die Auslässe aufweisenden Fläche der Zuführplatte (2) und der der Austragsplatte (3) Dichtelemente angeordnet sind, die insbesondere eine Steckverbindung der zu transportierenden Fluide ermöglichen.

4. Fluidweiche (1) nach Anspruch 3, **dadurch gekennzeichnet, dass** die Bewegung der Zuführplatte (2) und/oder die Austragsplatte (3) die Schritte Abstandsvergrößerung zwischen den Ebenen der Zuführplatte (2) und der Austragsplatte (3), Verschieben der Zuführplatte (2) und/oder der Austragsplatte (3) sowie Wiederherstellung der Ausgangsabstands zwischen den Ebenen der Zuführplatte (2) und der Austragsplatte (3).

5. Fluidweiche (1) nach einem der vorherigen Ansprüche, **dadurch gekennzeichnet, dass** die Spülzuführleitung (6) eine Druckluftleitung ist und dass die Fluidzuführ- (4a, 4b) und Fluidrückführungsleitungen (8a, 8b) Leitungen zum Fördern von Luft/Feststoff-Gemischen sind.

6. Fluidweiche (1) nach einem der vorherigen Ansprüche, **dadurch gekennzeichnet, dass** die Fluidweiche (1) keine Absperorgane aufweist.

7. Verwendung einer Fluidweiche nach einem der vorherigen Ansprüche bei der Förderung von flüssigen oder festen Medien, insbesondere von fluidisierten Feststoffen, besonders bevorzugt auf dem Gebiet der Pulverlackierung.
